# EUROPÄISCHE PATENTSCHRIFT

(11) **EP 2 447 544 B1**
(45) Veröffentlichungstag und Bekanntmachung des Hinweises auf die Patenterteilung: **21.01.2015**
(21) Anmeldenummer: 11008650.1
(22) Anmeldetag: 28.10.2011
(51) Int. Cl.: F15B 1/14

(54) **Behälter zum Aufnehmen, Speichern und Abgeben von gasförmigen, flüssigen und festen Medien sowie dessen Verwendung**
Container for holding, storing and dispensing gaseous, liquid and solid media, and use of same
Réservoir destiné à recevoir, stocker et dispenser des produits gazeux, liquides et solides, et utilisation d'un tel réservoir

(30) Priorität: 29.10.2010 DE 102010050113
(43) Veröffentlichungstag der Anmeldung: 02.05.2012
(73) Patentinhaber: MT Aerospace AG, 86153 Augsburg (DE)
(72) Erfinder: Becker, Ralf, 86391 Stadbergen (DE); Murawski, Bernd, 86152 Augsburg (DE); Wittmann, Michael, 86456 Gablingen (DE)
(74) Vertreter: Grape & Schwarzensteiner

(56) Entgegenhaltungen:
- FR-A- 1 480 673
- FR-A- 1 554 373
- GB-A- 1 367 915
- US-A- 4 098 297
- US-A- 4 234 017

## Beschreibung

Die vorliegende Erfindung betrifft einen Behälter zum Aufnehmen, Speichern und Abgeben von gasförmigen, flüssigen und festen Medien und dessen Verwendung.

Derartige Behälter sind allgemein bekannt. Gemäß bisherigem Stand der Technik sind solche Behälter vielfach auch als Tanks im Luft- und Raumfahrtbereich und dabei insbesondere im schwerelosen Raum eingesetzt. An Behälter für Anwendungen in der Luft- und Raumfahrt werden generell sehr individuelle und spezifische Bedingungen, wie eine ausgesprochen einfache, zugleich kompakte und zuverlässige Bauweise, eine geringstmögliche Masse, ein einfaches und sicheres Funktionsprinzip zur Förderung der gasförmigen, flüssigen und festen Medien in der Schwerelosigkeit, ein möglichst vollständiger Flüssigkeitsausstoß, ein platz- und raumsparendes Design, optimale Raumausnutzung, niedrige Herstellkosten und ähnliches, gestellt.

Beispielsweise umfassen diese Behälter einen Mantel und ein Trennelement. Der Mantel ist aus zwei miteinander zusammensetzbaren und verschweißbaren Gehäuseelementen gebildet. Das Trennelement ist in einem Innenraum des Behälters angeordnet, weist eine randseitige, umlaufende Verdickung zum Befestigen an dem Behälter auf und unterteilt den Innenraum des Behälters in wenigstens zwei Kammern dichtend, insbesondere mediendicht, welche in aller Regel mit zwei Fluiden, zum Beispiel einem gasförmigen (Bedrückungs-)Medium (Gas) und einem flüssigen (Nutz-)Medium (Treibstoff, (Trink-)Wasser) befüllt werden. Da das Trennelement elastisch ausgebildet ist, kann sich in den zwei Kammern der gleiche Druck ausbilden, so dass sich in dem Behälter ein Druck aufprägt, ohne dass sich das Gas in dem flüssigen Treibstoff lösen kann. Auf diese Weise ist eine Förderung des flüssigen (Nutz-)Mediums ermöglicht, und zwar ohne Einsatz von Pumpen und ähnlichen Bauteilen, was wiederum zwangsläufig den Nachteil von zusätzlichem Gewicht und Kostenaufwand mit sich bringt.

Eine randseitige, umlaufende Verdickung zum Befestigen des Trennelementes an dem Behälter ist in mannigfaltiger Abwandlung vorgeschlagen. So sind beispielsweise in den GB 1 509 282 A, GB 2 102 068 A und der GB 2 102 068 A Druckbehälter beschrieben, bei denen das Trennelement über eine Aufdickung im Bereich der Teilungsebene zwischen zwei Gehäuseelementen eingesetzt und durch die Verschweißung der zwei Gehäuseelemente miteinander fixiert werden. Allerdings haben sich diese Druckbehälter aufgrund ihrer konstruktiven Ausgestaltung insgesamt als verhältnismäßig nachteilig erwiesen. Bereits die Montage und Befestigung des Trennelementes gestalten sich aufwendig. Insbesondere ist nicht ausgeschlossen, dass die Aufdickung des Trennelementes bereits während dem Verschweißen der zwei Gehäuseelemente aus der vorbestimmten Position herausrutscht und somit keine Dichtigkeit erreicht wird. In der Praxis hat sich allerdings als besonders nachteilig erwiesen, dass die Dichtigkeit des Druckbehälters ausschließlich nach dem Verschweißen der zwei Gehäuseelemente bzw. nach Fertigstellung der Druckbehälter insgesamt überprüfbar ist. Sollte sich bei einer solchen Überprüfung der Druckbehälter deren Undichtigkeit herausstellen, würden die gesamten Druckbehälter Ausschuss darstellen. Bei alledem kommt hinzu, dass die Aufdickung durch den Schweißschrumpf axial vorgespannt wird und damit ausschließlich von der Güte der Schweißnähte abhängt. Abgesehen davon, dass die Vorspannung undefiniert ist, wird die Alterung des Trennelementes im Bereich der Aufdickung durch eine solche Vorspannung erheblich beschleunigt. Dies vor allem dann, wenn das Trennelement einem aggressiven Medium ausgesetzt ist. Gleiche Nachteile ergeben sich uneingeschränkt bei den Druckbehältern nach den GB 550,410 A, GB 738,083 A, 553,571 A und GB 903,529 A, bei denen die zwei Gehäuseelemente und das Trennelement in deren Teilungsebene miteinander über Schraub- oder Klemmverbindungen montiert sind. So besteht durch selbsttätiges Lösen der gesonderten Befestigungselemente der Schraub- oder Klemmverbindungen, etwa infolge Vibrationen des Behälters, Auftreten von äußeren Kräften und Schlägen etc., eine erhöhte Gefahr einer Undichtigkeit des Innenraumes der Druckbehälter gegenüber der Umgebung.

Nicht anders verhält es sich schließlich mit den Druckspeichern, die in den EP 1 370 772 B1, US 2010/0071792 A1, EP 1 031 729 A2, US 4,595,037 und DE 10 2008 062 837 A1 offenbart sind. Auch bei sämtlichen dieser Druckspeicher befindet sich wiederum ein Trennelement mit einer Aufdickung in der Teilungsebene der zwei Gehäuseelemente selbst. Die Aufdickung wird radial verpresst. Die Dichtflächen dieses Behälters werden durch die zwei Gehäuseelemente selbst gebildet. Neben den zuvor angesprochenen weiteren Nachteilen lassen sich insoweit die ordnungsgemäße Positionierung des Trennelementes und dessen Dichtigkeit vor dem Montieren und Verschweißen der zwei Gehäuseelemente miteinander nicht überprüfen. Zudem sind die zwei Gehäuseelemente aufgrund der Toleranzkette ausgesprochen schwer zu fertigen. Darüber hinaus ist es besonders unvorteilhaft, dass die Schweißnähte gleichermaßen in der Teilungsebene der zwei Gehäuseelemente angeordnet sind, die Fügestelle mithin sehr nahe zu der Aufdickung gelegen ist. Der Hitzeeintrag und Hitzefluss beim Schweißen können auf diese Weise das Trennelement zerstören oder zumindest erheblich beschädigen.

Weiterhin ist aus der DE 42 43 652 A1 ein aus einer unteren und einer oberen Halbschale gebildeten Druckflüssigkeitsspeicher mit einem flexiblen Trennelement offenbart. Das Trennelement unterteilt einen Innenraum des Speichers in zwei Abteile, die eine Gas- sowie eine Flüssigkeitskammer bilden. Das flexible Trennelement umfasst einen integriert geschichteten Verbundkörper, der wenigstens eine Gassperrschicht und wenigstens eine Elastiklage enthält. Bevor die zwei Halbschalen miteinander verschweißt werden, soll das flexible Trennelement an dessen Umfang am offenen Ende der unteren Halbschale mittels eines gesonderten Halteringes befestigt werden. Auf diese Weise soll der Zustand der Befestigung des flexiblen Elementes an der unteren Halbschale bezüglich seiner Qualität geprüft werden können, bevor die untere Halbschale durch die obere Halbschale verschlossen wird.

Darüber hinaus ist aus der DE 21 09 238 C3 ein Druckbehälter aus einem starren Gefäß aus zwei miteinander verschweißten Teilen mit einer im Inneren des Gefäßes angeordneten biegsamen Trennwand, welche das Gefäß unter Abdichtung in zwei Kammern veränderlichen Volumens aufteilt, bekannt. Dabei ist ein separates ringförmiges Aufhängeorgan zum Aufhängen der Trennwand vorgesehen, das die beiden Gefäßteile vor Herstellung der Schweißnaht leicht und genau in Stellung bringen soll. Insbesondere soll durch das Aufhängeorgan eine genaue Zentrierung und axiale Relativstellung der zwei Gefäßteile, eine Verteilung und Abführung der Schweißwärme und eine Überprüfung der Schweißnaht nach deren Herstellung erreicht werden.

Schließlich ist aus der FR 1 480 673 A ein hydropneumatischer Energiespeicher für hydraulische Anlagen mit einem zweiteiligen, starren Gehäuse und einer nachgiebigen, den Innenraum des Speichers unterteilenden Trennwand bekannt. Die Trennwand ist an ihrer Randzone mittels eines ringförmigen, geschlossenen Halteglieds elastisch verformt gegen einen im Wesentlichen zylindrischen Bereich der Speicherinnenwand gepresst. Zur Sicherung der Trennwand gegen Lageveränderungen wirken ein Ringwulst und eine an der Innenwand des Gehäuses ausgebildete Ringnut etwas unterhalb der Trennfuge der Gehäuseteile zusammen.

Der vorliegenden Erfindung liegt daher die Aufgabe zugrunde, einen Behälter zum Aufnehmen, Speichern und Abgeben von gasförmigen, flüssigen und festen Medien zur Verfügung zu stellen, mit welchem sich die obigen Nachteile verhindern lassen, welcher mithin konstruktiv besonders einfach, zugleich kompakt und stabil sowie sehr leichtbauend ist, zugleich zuverlässig eine hohe Dichtigkeit aufweist, die Dichtigkeit unabhängig von der Fertigstellung des gesamten Behälters überprüfbar ist und in der Herstellung ausgesprochen kostengünstig ist, sowie dessen Verwendung bereitzustellen.

Diese Aufgabe wird in vorrichtungstechnischer Hinsicht auf überraschend einfache Weise durch die Merkmale des Anspruchs 1 gelöst.

Durch die Ausgestaltung des erfindungsgemäßen Behälters zum Aufnehmen, Speichern und Abgeben von gasförmigen, flüssigen und festen Medien, mit einem Mantel, der aus wenigstens zwei miteinander zusammensetzbaren und verschweißbaren Gehäuseelementen gebildet ist, und mindestens einem Trennelement, das in einem Innenraum des Behälters angeordnet ist, eine randseitige, umlaufende Verdickung zum Befestigen an dem Behälter aufweist und den Innenraum des Behälters in wenigstens zwei Kammern dichtend, insbesondere mediendicht, unterteilt, wobei das mindestens eine Trennelement in einem stirnseitigen Bereich oder einem zu dem stirnseitigen Bereich benachbarten Bereich eines der wenigstens zwei Gehäuseelemente befestigbar ist, derart, dass dessen Dichtigkeit vor dem Zusammensetzen und Verschweißen der wenigstens zwei Gehäuseelemente überprüfbar ist und wobei das Trennelement mit der randseitigen, umlaufenden Verdickung in eine axial umlaufende Tasche des einen der wenigstens zwei Gehäuseelemente einbringbar und in der axial umlaufenden Tasche form- und/oder reibschlüssig gehalten ist, wird eine besonders einfache, zudem kompakte und stabile Bauweise des Behälters von verhältnismäßig geringem Gewicht erreicht. Zum einen sind keine zusätzlichen Befestigungselemente für Schraub- oder Klemmverbindungen zum Aufbringen einer Vorspannung vorgesehen, die sich im Betrieb lockern könnten. Demzufolge ist ein Vorspannungsverlust, der zwangsläufig eine Undichtigkeit bedeuten würde, ausgeschlossen. Zum anderen ermöglicht ein Verschweißen der zwei Gehäuseelemente an sich bereits eine gewichtsgünstige und zugleich zuverlässig dichte Ausgestaltung des Behälters insgesamt. Zugleich weist der erfindungsgemäße Behälter eine hohe Dichtigkeit auf. Insbesondere ist der erfindungsgemäße Behälter gegenüber hohem Innen- und Außendruck unempfindlich. Demnach sind plastische Verformungen des Behälters unter einem spezifizierten maximalen Betriebsinnendruck ausgeschlossen. Zusätzlich lässt sich eine hohe Dichtigkeit des Trennelementes durch Vermeidung von jeglicher thermischen Belastung des Trennelementes bzw. der Aufdickung erhalten. Das Trennelement reicht auch im unbedrückten Zustand sehr nahe an die Innenwand des Behälters heran, so dass sich ein minimales Restvolumen im Innenraum, gleichbedeutend mit einer möglichst vollständigen Entnahme des entsprechenden Mediums, erreichen lässt, ohne das Trennelement auf große Zugspannungen oder durch große Dehnungen beim Aufblasen des Trennelementes zu stark zu beanspruchen. Dies ist insgesamt, aber vor allem auch bei Einsatz von sehr aggressiven Medien, bei welchem das Trennelement üblicherweise aus einem Material mit niedrigeren Dehngrenzen besteht, sehr vorteilhaft. Der wesentliche Vorteil des erfindungsgemäßen Behälters aber besteht darin, eine Prüfbarkeit der Dichtigkeit in einem frühen Stadium der Fertigung zu ermöglichen und die Dichtigkeit infolgedessen weitestgehend unabhängig von der Herstellung des eigentlichen Behälters bzw. Druckkörpers sicherzustellen. Das Trennelement lässt sich bereits auf Dichtigkeit während oder vor dem Einbau in den und die Fertigstellung des erfindungsgemäßen Behälter/s prüfen. Die Prüfbarkeit jeden einzelnen Arbeitsschrittes, insbesondere ob die Anforderung der Dichtigkeit erfüllt wird, kann mithin erfolgen, ohne dass jeweils der gesamte Behälter zu Ausschuss wird, wenn diese Anforderung nicht erfüllt wird. In ganz vorteilhafter Weise ist das Trennelement dabei mit der randseitigen, umlaufenden Verdickung in die axial umlaufende Tasche des einen der wenigstens zwei Gehäuseelemente einbringbar und in der axial umlaufenden Tasche form- und/oder reibschlüssig gehalten. Die Dichtigkeit des Trennelementes kann somit bereits unmittelbar nach dessen Einbringen oder Einsetzen in der Tasche überprüft werden, d.h. noch bevor die zwei Gehäuseelemente miteinander zu dem erfindungsgemäßen Behälter verschweißt werden. Schließlich gestaltet sich die Herstellung des erfindungsgemäßen Behälters einfach und wenig arbeitsintensiv und ist somit ausgesprochen kostengünstig.

Weitere vorteilhafte Einzelheiten des erfindungsgemäßen Behälters sind in den Ansprüchen 2 bis 17 beschrieben.

Zum Erhalt einer hohen Dichtigkeit einerseits und damit einhergehend zur Erhöhung der Lebensdauer des erfindungsgemäßen Behälters insgesamt andererseits dienen die Merkmale des Anspruchs 2. Danach ist das Trennelement mit der randseitigen, umlaufenden Verdickung an dem Behälter mit einer vorbestimmten, dauerhaft anhaltenden Vorspannung oder Verspannung oder spannungsfrei befestigbar.

Von großer Bedeutung für eine ausgesprochen einfache und schnelle, zugleich individuelle und vielseitige Anpassung an beliebige und unterschiedlichste konstruktive Vorgaben sind die Maßnahmen des Anspruchs 3, wonach das Trennelement mit der randseitigen, umlaufenden Verdickung an dem Behälter in dem stirnseitigen Bereich oder dem zu dem stirnseitigen Bereich benachbarten Bereich des einen der wenigstens zwei Gehäuseelemente unmittelbar oder mittelbar befestigbar ist.

In vorteilhafter Weise lassen sich Form und Abmessung des Trennelementes mit der randseitigen, umlaufenden Verdickung vor dessen Einbau bzw. Einbringung oder Einsatz in die Tasche genau bestimmen und an deren Form und Abmessung anpassen, wodurch Toleranzketten vermieden werden.

In diesem Zusammenhang ist die randseitige, umlaufende Verdickung das Trennelementes nach Anspruch 4 bevorzugt im Querschnitt O-förmig, halbkugelförmig, kalottenförmig, konisch, elliptisch, dreieckförmig, quadratisch, rechteckförmig, polygonal oder parallelogrammförmig oder mit anderen Querschnittsformen ausgebildet.

Des Weiteren ist erfindungsgemäß vorgesehen, dass die randseitige, umlaufende Verdickung des Trennelementes nach Anspruch 5 mit einem Verstärkungselement versehen ist. Dieses Verstärkungselement verhindert zusätzlich ein Herausrutschen aus der Tasche.

Vorzugsweise liegt es im Rahmen der Erfindung, dass das Verstärkungselement nach Anspruch 6 in der randseitigen, umlaufenden Verdickung das Trennelementes integral angeordnet, insbesondere einvulkanisiert, ist.

Besonders vorteilhaft sind die Merkmale des Anspruchs 7, wonach das Verstärkungselement aus Metall, insbesondere aus Stahl, Edelstahl, Aluminium, Titan, einer Legierung daraus und/oder einer Kombination daraus und/oder aus Kunststoff, insbesondere faserverstärktem Kunststoff, und/oder aus Faserverbundwerkstoff gebildet ist.

Zweckmäßigerweise ist das Verstärkungselement nach Anspruch 8 aus einem, insbesondere ringförmigen, Segment oder aus wenigstens zwei voneinander unabhängigen Segmenten gebildet.

Entsprechend den Merkmalen des Anspruchs 9 ist die axial umlaufende Tasche integral mit dem einen der wenigstens zwei Gehäuseelemente ausgebildet. In alternativer Ausgestaltung dazu kann die axial umlaufende Tasche ebenso an einem gesonderten, ringförmigen und an dem einen der wenigstens zwei Gehäuseelemente, insbesondere mittels Schweiß- oder Schraubverbindung, befestigbaren Halteelement oder Trägerelement angeformt sein.

Nach Anspruch 10 liegt es im Rahmen der Erfindung, dass die axial umlaufende Tasche einen außenliegenden Schenkel, welcher den stirnseitigen Bereich oder den zu dem stirnseitigen Bereich benachbarten Bereich des einen der wenigstens zwei Gehäuseelemente bildet, umfasst.

Weiterhin ist erfindungsgemäß vorgesehen, dass die axial umlaufende Tasche nach Anspruch 11 einen innenliegenden Schenkel, über welchen sich der außenliegende Schenkel hinaus erstreckt, umfasst. Der außenliegende Schenkel weist somit eine größere Länge als der innenliegende Schenkel auf. Dadurch ist ein ausreichend großer Abstand zwischen dem Schweißort bzw. der Schweißnaht zwischen den zwei Gehäuseelementen und dem Trennelement sichergestellt. Eine Beschädigung des Trennelementes beim Verschweißen einerseits und eine Beeinträchtigung der Dichtigkeit des Trennelements durch die Schweißverzüge andererseits sind damit ausgeschlossen.

Zur schonenden und/oder knickfreien Abstützung des mindestens einen Trennelementes umfasst die axial umlaufende Tasche dabei nach Anspruch 12 einen innenliegenden Schenkel, welcher endseitig mit einer Verdickung oder Abrundung versehen ist.

Von besonderem Vorteil sind die konstruktiven Maßnahmen des Anspruchs 13. Demnach kommuniziert die axial umlaufende Tasche über eine Durchgangsbohrung mit dem Innenraum des Behälters. In der Tasche enthaltenes Medium kann auf diese Weise beim Einbringen oder Einsetzen des Trennelementes mit der randseitigen, umlaufenden Verdickung in die Tasche durch die Durchgangsbohrung entweichen. Einer Beeinträchtigung durch das in der Tasche enthaltene Medium ist entgegengewirkt.

Um das Trennelement an dem Behälter relativ zu diesem festzulegen, ist das Trennelement mit der randseitigen, umlaufenden Verdickung nach Anspruch 14 in ganz vorteilhafter Weise durch das andere der wenigstens zwei Gehäuseelemente in der axial umlaufenden Tasche gehalten.

In diesem Zusammenhang ist es von besonderem Vorteil, dass das Trennelement mit der randseitigen, umlaufenden Verdickung nach Anspruch 15 durch eine an dem anderen der wenigstens zwei Gehäuseelemente angeordnete, auskragende und zum stirnseitigen Bereich oder einem zu dem stirnseitigen Bereich benachbarten Bereich des einen der wenigstens zwei Gehäuseelemente innenliegende Lasche in der axial umlaufenden Tasche gehalten ist. Durch eine solche Lasche ist ein Herausrutschen des Trennelementes aus der Tasche auf ebenso einfache wie wirksame Weise verhindert. Die lichte Weite zwischen der Lasche und dem innenliegenden Schenkel der Tasche entspricht dabei im Wesentlichen der Dicke des Trennelementes.

In vorteilhafter Weise stützen sich die wenigstens zwei Gehäuseelemente nach Anspruch 16 an einander ab, wobei die Stirnseite des einen der wenigstens zwei Gehäuseelemente und ein korrespondierender Anschlag des anderen der wenigstens zwei Gehäuseelemente in gegenseitigen Wirkeingriff bringbar sind. Das Trennelement mit der randseitigen, umlaufenden Verdickung an einem Halteelement form- und/oder reibschlüssig anzuordnen, insbesondere ein- oder aufvulkanisieren oder anzukleben hat sich in der Praxis als besonders vorteilhaft erwiesen, da die Dichtigkeit nicht nur vor Ort nach Einbringen bzw. Einsetzen oder Verschweißen des Halteelementes mit einem der zwei Gehäuseelemente, sondern bereits als Bauteil an sich auf Dichtigkeit überprüfbar ist. Insoweit kann die Dichtigkeit bereits bei der Fertigung der Einheit von Halteelement und Trennelement überprüft werden.

Vorzugsweise ist das Halteelement mit einer vorbehandelten oder geprimmerten Oberfläche versehen, um für eine gute mechanische Anbindung zu sorgen und um eine vollständige Dichtigkeit zu gewährleisten.

Um einen Formschluss des Trennelementes zu dem Halteelement zusätzlich zu unterstützen, ist das Halteelement mit Ausnehmungen, Vertiefungen und Nuten und/oder Erhebungen und Vorsprüngen und/oder Durchbrüchen versehen.

Als vorteilhaft hat sich erwiesen, dass das Halteelement ausgesprochen dünn und/oder flach ausgebildet ist. Der Hitzefluss und die Schweißverzüge können auf diese Weise erheblich reduziert werden.

Das Halteelement umfasst einen Befestigungsabschnitt, der sich von dem das Trennelement mit der randseitigen, umlaufenden Verdickung weg erstreckt und mit mindestens einem der wenigstens zwei Gehäuseelemente verschweißbar ist. Somit ist für einen ausreichend großen Abstand zwischen dem Schweißort bzw. der Schweißnaht zwischen den zwei Gehäuseelementen und dem Trennelement gesorgt. Eine Beschädigung des Trennelementes beim Verschweißen durch die Schweiß-Hitze und eine Beeinträchtigung der Dichtigkeit des Trennelements durch die Schweißverzüge sind vermieden.

Darüber hinaus liegt es im Rahmen der Erfindung, dass das mindestens eine Trennelement entsprechend den Merkmalen des Anspruchs 17 eine nach unten oder oben, vollständig oder teilweise durchgestülpte Form aufweist oder in einer Form eines parallelen Mäanders, eines parallelen Mäanders mit Radius, eines kegeligen Mäanders, einer parallelen Zick-Zack-Form oder einer winkligen Zick-Zack-Form oder dergleichen Form ausgebildet ist.

Schließlich liegt es noch im Rahmen der Erfindung, den erfindungsgemäßen Behälter zum Aufnehmen, Speichern und Abgeben von gasförmigen, flüssigen und festen Medien nach Anspruch 18 in Luftfahrzeugen oder Fluggeräten der Luft- und Raumfahrt, vorzugsweise in Flugzeugen und Raumflugkörpern, oder als Druckspeicher oder Druckausgleichsgefäß zu verwenden.

Ganz besonders eignet sich der erfindungsgemäße Behälter zum Aufnehmen, Speichern und Abgeben von gasförmigen, flüssigen und festen Medien, insbesondere von Flüssigkeiten und viskosen Stoffen, vorzugsweise von Treib- oder Kraftstoffen, wie Hydrazin, Monomethylhydrazin (MMH), unsymmetrischen Dimethlyhydrazin (UDMH) oder Kerosin, Oxidationsmitteln (Oxidatoren), wie Stickstofftetroxiden oder Distickstofftetroxiden (NTO), oder sonstigen Oxidationsmitteln (Oxidatoren), oder Treibstoff/Oxidator-Gemischen und/oder (Trink-)Wasser und Abwasser, für Tanks und Treibstofftanks von Raketen und/oder Satelliten.

Weitere Merkmale, Vorteile und Einzelheiten der Erfindung ergeben sich aus der nachfolgenden Beschreibung von einigen bevorzugten Ausführungsformen der Erfindung sowie anhand der Zeichnungen. Hierbei zeigen:
- Fig. 1: eine schematische Längsschnittansicht durch eine Ausführungsform eines erfindungsgemäß ausgebildeten Behälters,
- Fig. 2: eine schematische, teilweise abgebrochene Schnittansicht durch eine Ausführungsform eines erfindungsgemäß ausgebildeten Behälters entsprechend Ausschnitt II in der Fig. 1, in vergrößerter Darstellung, und
- Fig. 3: eine schematische Längsschnittansicht durch eine andere Ausführungsform eines Behälters,
- Fig. 4: eine schematische, teilweise abgebrochene Schnittansicht durch eine Ausführungsform eines Behälters entsprechend Ausschnitt IV in der Fig. 3, in vergrößerter Darstellung, und
- Fig. 5A bis 5F: schematische Längsschnittsansichten durch verschiedene Ausführungsformen von erfindungsgemäß ausgebildeten Behältern mit unterschiedlichen erfindungsgemäßen Trennelementen entsprechend den Fig. 1 und 3, in etwas verkleinerter Darstellung.

Bei der nachfolgenden Beschreibung von Ausführungsformen eines erfindungsgemäßen Behälters 10 zum Aufnehmen, Speichern und Abgeben von gasförmigen, flüssigen und festen Medien sind einander entsprechende, gleiche Bauteile jeweils mit identischen Bezugsziffern versehen.

Der erfindungsgemäße Behälter 10 zum Aufnehmen, Speichern und Abgeben von gasförmigen, flüssigen und festen Medien findet in vorteilhafter Weise in Luftfahrzeugen oder Fluggeräten der Luft- und Raumfahrt, vorzugsweise in Flugzeugen und Raumflugkörpern, oder als Druckspeicher oder Druckausgleichsgefäß Verwendung. In diesem Zusammenhang eignet sich der erfindungsgemäße Behälter 10 für den Einsatz im Weltraum, da Flüssigkeiten und viskose Stoffe aufgrund der Schwerelosigkeit nicht selbsttätig gerichtet zu einem definierten Ort zu fließen vermögen. In ganz besonderem Maße lässt sich der erfindungsgemäße Behälter 10 zum Aufnehmen, Speichern und Abgeben von gasförmigen, flüssigen und festen Medien, insbesondere von Flüssigkeiten und viskosen Stoffen, vorzugsweise von Treib- oder Kraftstoffen, wie Hydrazin, Monomethylhydrazin (MMH), unsymmetrischen Dimethlyhydrazin (UDMH) oder Kerosin, Oxidationsmitteln (Oxidatoren), wie Stickstofftetroxiden oder Distickstofftetroxiden (NTO) oder sonstigen Oxidationsmitteln (Oxidatoren), oder Treibstoff/Oxidator-Gemischen und/oder (Trink-)Wasser und Abwasser, für Tanks und Treibstofftanks von Raketen und/oder Satelliten, zum Beispiel als Treibstoff/Oxidator-Gemisch einer Stufe einer Trägerrakete, einsetzen.

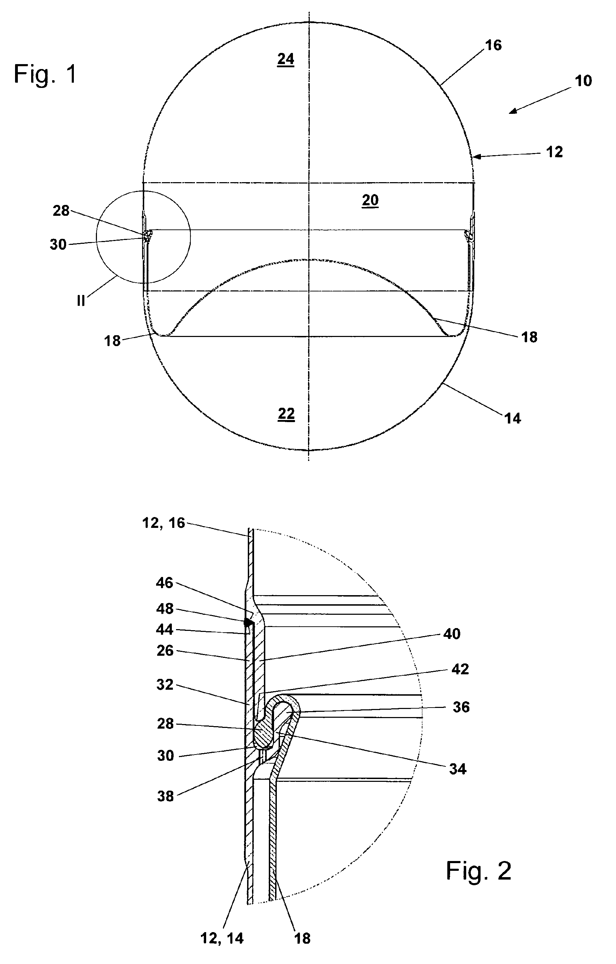

Die in den Fig. 1 und 2 schematisch dargestellte Ausführungsform des Behälters 10 nach der Erfindung umfasst einen, insbesondere dünnwandigen, Mantel 12. Der Mantel 12 ist aus wenigstens zwei miteinander zusammensetzbaren und verschweißbaren Gehäuseelementen 14, 16 gebildet.

Bei der in den Fig. 1 und 2 dargestellten Ausführungsform des Behälters 10 sind zwei Gehäuseelemente 14, 16, nämlich ein unteres Gehäuseelement 14 und ein oberes Gehäuseelement 16, vorgesehen. Die zwei Gehäuseelemente 14, 16 sind etwa schalenförmig ausgestaltet.

Weiterhin umfasst die Ausführungsform des erfindungsgemäßen Behälters 10, wie in den Fig. 1 und 2 schematisch dargestellt ist, mindestens ein Trennelement 18, das in einem Innenraum 20 des Behälters 10 angeordnet ist. Bei der dargestellten Ausführungsform ist ein einziges Trennelement 18 vorgesehen.

Das Trennelement 18 ist elastisch ausgebildet, um sich nahezu vollständig an den Behälter 10 anschmiegen zu können. Zu diesem Zweck ist das Trennelement 18 in aller Regel dünn bzw. flach ausgebildet und besteht vornehmlich aus Kunststoff oder Gummi. Gleichermaßen ist es jedoch denkbar, als Material für das Trennelement 18 auch Metall, etwa eine Folie aus weichem Metall oder dergleichen, vorzusehen.

Wie in der Fig. 1 entnehmbar ist, unterteilt das Trennelement 18 den Innenraum 20 des Behälters 10 dichtend, insbesondere mediendicht, in wenigstens zwei Kammern 22, 24. Das Trennelement 18 wirkt somit als Membran oder Diaphragma, das die in den zwei Kammern 22, 24 aufgenommenen und gespeicherten Medien voneinander trennt. Dessen Funktion einer besonders hohen Dichtigkeit ist von wesentlicher Bedeutung für die Funktionsfähigkeit des Behälters 10 insgesamt.

Das Trennelement 18 ist in einem stirnseitigen Bereich 26 oder einem zu dem stirnseitigen Bereich 26 benachbarten Bereich eines der wenigstens zwei Gehäuseelemente 14, 16 befestigbar. Bei der gezeigten Ausführungsform ist das Trennelement 18 an dem unteren Gehäuseelement 14 befestigt, und zwar derart, dass dessen Dichtigkeit vor dem Zusammensetzen und Verschweißen der wenigstens zwei Gehäuseelemente 14, 16 überprüfbar ist. Ohne im Einzelnen dargestellt zu sein, ist es auch ohne weiteres möglich, das Trennelement 18 in entsprechender Weise unter kinematischer Umkehr an dem oberen Gehäuseelement 16 zu befestigen.

Wie insbesondere aus der Fig. 2 hervorgeht, weist das Trennelement 18 zu dessen Befestigung an dem Behälter 10 eine randseitige, umlaufende Verdickung 28 oder dergleichen Aufdickung auf.

Die randseitige, umlaufende Verdickung 28 das Trennelementes 18 ist im Querschnitt O-förmig, halbkugelförmig, kalottenförmig, konisch, elliptisch, dreieckförmig, quadratisch, rechteckförmig, polygonal oder parallelogrammförmig oder mit anderen Querschnittsformen ausgebildet.

Ohne im Einzelnen dargestellt zu sein, ist es weiterhin denkbar, dass die randseitige, umlaufende Verdickung 28 des Trennelementes 18 mit einem Verstärkungselement (nicht gezeigt) versehen ist. Das Verstärkungselement kann in der randseitigen, umlaufenden Verdickung 22 das Trennelementes 18 integral angeordnet, insbesondere einvulkanisiert, sein. Vorzugsweise kann das Verstärkungselement dabei aus Metall, insbesondere aus Stahl, Edelstahl, Aluminium, Titan, einer Legierung daraus und/oder einer Kombination daraus und/oder aus Kunststoff, insbesondere faserverstärktem Kunststoff, und/oder aus Faserverbundwerkstoff gebildet sein. Ebenso kann das Verstärkungselement aus einem, insbesondere ringförmigen, Segment oder in alternativer Ausgestaltung aus wenigstens zwei oder mehreren voneinander unabhängigen Segmenten gebildet sein.

In vorteilhafter Weise ist das Trennelement 18 mit der randseitigen, umlaufenden Verdickung 28 an dem Behälter 10 bei der in den Fig. 1 und 2 gezeigten Ausführungsform vorzugsweise mit einer vorbestimmten, dauerhaft anhaltenden Vorspannung oder Verspannung befestigbar. Nachdem das Trennelement 18 in aller Regel aus Kunststoff oder Gummi ausgebildet ist und somit eine hohe Elastizität gewährleistet, lässt sich auf besonders einfache Weise eine ausreichend hohe Dichtigkeit erreichen, und zwar selbst dann, wenn die in den zwei Kammern 22, 24 aufgenommenen und gespeicherten Medien gegenüber Material wie Kunststoff oder Gummi ausgesprochen aggressiv sind. Die Lebensdauer des erfindungsgemäßen Behälters 10 insgesamt kann damit einhergehend in vorteilhafter Weise erhöht werden.

Bei der Ausführungsform des erfindungsgemäßen Behälters 10 entsprechend den Fig. 1 und 2 ist das Trennelement 18 mit der randseitigen, umlaufenden Verdickung 28 an dem Behälter 10 in dem stirnseitigen Bereich 26 oder einem zu dem stirnseitigen Bereich 26 benachbarten Bereich des Gehäuseelementes 14 unmittelbar befestigbar.

Dabei ist das Trennelement 18 mit der randseitigen, umlaufenden Verdickung 28 in eine axial umlaufende Tasche 30 des Gehäuseelementes einbringbar oder einsetzbar. Die axial umlaufende Tasche 30 ist integral mit dem Gehäuseelement 14 ausgebildet. Das Trennelement 18 ist in der axial umlaufenden Tasche 30 vorzugsweise form- und reibschlüssig oder sogar ausschließlich reibschlüssig eingefügt und gehalten, vergleichbar zu einer Dichtung in Form eines O-Rings. Vorzugsweise sind der Querschnitt der Verdickung 28 und der Querschnitt der Tasche 30 in Form und Abmessung aufeinander abgestimmt, um einen Form- und Reibschluss oder nur einen Reibschluss sicherzustellen bzw. einen Verpressungsgrad zu erhalten, der ausreicht, dass die Verdickung 28 sicher, zuverlässig und dauerhaft in der Tasche 30 verbleibt. Ein selbsttätiges Lösen bzw. Herausrutschen der Verdickung 28 aus der Tasche 30 ist ausgeschlossen. Ohne im Einzelnen dargestellt zu sein, ist es allerdings ebenso denkbar, dass der Querschnitt der Verdickung 28 genau auf den Querschnitt der Tasche 30 in Form und Abmessung angepasst ist. In diesem Fall liegt ein Formschluss vor.

Die axial umlaufende Tasche 30 umfasst einen außenliegenden Schenkel 32. Der außenliegende Schenkel 32 bildet den stirnseitigen Bereich 26 oder den dazu benachbarten Bereich des Gehäuseelementes 14. Des Weiteren umfasst die Tasche 30 einen innenliegenden Schenkel 34. Der außenliegende Schenkel 32 erstreckt sich über den innenliegende Schenkel 34 hinaus. Die Länge des außenliegenden Schenkels 32 ist mithin größer als diejenige des innenliegenden Schenkels 34. Bei der in der Fig. 2 gezeigten Ausführungsform beträgt die Länge des außenliegenden Schenkels 32 beispielhaft im Wesentlichen die doppelte Länge des innenliegenden Schenkels 34, ohne darauf beschränkt zu sein.

Das Längenverhältnis von außenliegendem Schenkel 32 zu innenliegendem Schenkel 34 hängt dabei letztlich von dem beim Verschweißen der beiden Gehäuseelemente 14, 16 miteinander erzeugten Hitzeeintrag und Hitzefluss ab. Um eine Überbeanspruchung und damit mögliche Beschädigung des Trennelementes 18 beim Verschweißen zu vermeiden, ist das Längen-/Wanddickenverhältnis an den jeweiligen Gegebenheiten anzupassen. Bei der in der Fig. 2 dargestellten Ausführungsform sollte das Verhältnis von außenliegendem Schenkel 32 zu innenliegendem Schenkel 34, d.h. das Längen-/Wanddickenverhältnis, das beispielsweise in einem Bereich von im Wesentlichen 3/1 bis etwa 3/2 liegt, ausreichend sein, ohne ebenfalls auf ein solches Längen-/Wanddickenverhältnis beschränkt zu sein.

Um das Trennelemente 18 möglichst schonend und/oder knickfrei abzustützen, ist der innenliegenden Schenkel 34 der Tasche 30, wie die Fig. 2 zeigt, endseitig mit einer Verdickung 36 und/ oder Abrundung versehen.

Weiterhin ist in der Tasche 30 eine Durchgangsbohrung 38 vorgesehen. Die Durchgangsbohrung 38 ist in ganz bevorzugter Weise im Bereich des Grundes der Tasche 30 zwischen dem außenliegenden Schenkel 32 und dem innenliegenden Schenkel 34 angeordnet. Die Tasche 30 kann über die Durchgangsbohrung 38 mit dem Innenraum 20 des Behälters 10 kommunizieren. Auf diese Weise wird der Einbau bzw. das Einbringen oder Einsetzen der Verdickung 28 des Trennelementes 18 in die Tasche 30 erheblich vereinfacht. So kann eventuell in der Tasche 30 befindliches Medium über die Durchgangsbohrung 38 entweichen, ohne den Einbau des Trennelementes 18 zu stören.

Wie sich der Fig. 2 darüber hinaus entnehmen lässt, ist das Trennelement 18 mit der randseitigen, umlaufenden Verdickung 28 zusätzlich durch das andere Gehäuseelement 16 der wenigstens zwei Gehäuseelemente 14, 16, d.h. bei der gezeigten Ausführungsform durch das obere Gehäuseelement 16, in der axial umlaufenden Tasche 30 gehalten. Auf diese Weise ist das Trennelement 18 nach dem Einbringen oder Einsetzen in die Tasche 30 zuverlässig arretiert. Ein ungewolltes, gegebenenfalls selbsttätiges Herausrutschen des Trennelementes 18 ist ausgeschlossen.

Entsprechend der Fig. 2 ist zu diesem Zweck eine Lasche 40 vorgesehen. Die Lasche 40 ist an dem anderen Gehäuseelemente 16 angeordnet. Die auskragende, innenliegende Lasche 40 verläuft parallel zu dem stirnseitigen Bereich 26 oder einem zu dem stirnseitigen Bereich 26 benachbarten Bereich des Gehäuseelementes 14, vorzugsweise mit geringem Spiel. Ohne dargestellt zu sein, ist es auch möglich, dass der Bereich 26 und die Lasche 40 einander berühren. Endseitig ist die auskragende, innenliegende Lasche 40 des Gehäuseelementes 16 zusätzlich mit einer Abrundung 42 versehen, um jegliche Beschädigung des Trennelementes 18 beispielsweise bei Schwingungen des Behälters 10 während dessen Gebrauch zu verhindern. Alternativ oder kumulativ dazu ist es denkbar, endseitig eine Verdickung (nicht dargestellt) ähnlich der Verdickung 28 vorzusehen.

Weiterhin lässt die Fig. 2 erkennen, dass die auskragende, innenliegende Lasche 40 des Gehäuseelementes 16 das Trennelement 18 nicht berührt oder sogar beaufschlagt, um keine Spannung auf das Trennelement 18 aufzubringen. Daher ist die lichte Weite zwischen der Lasche 40 des Gehäuseelementes 16 und der Verdickung 36 oder Abrundung des innenliegenden Schenkels 34 der Tasche 30 im Wesentlichen gleich oder größer als die Dicke des Trennelementes 18 gewählt. Gleichzeitig ist die lichte Weite in jedem Fall aber kleiner als die randseitige, umlaufende Verdickung 28 des Trennelementes 18 selbst, und zwar unter Berücksichtigung von deren maximaler Verformbarkeit.

Die zwei Gehäuseelemente 14, 16 stützen sich, wie aus der Fig. 2 ebenfalls hervorgeht, an einander ab. Dabei sind die Stirnseite 44 des Gehäuseelementes 14 und ein korrespondierender Anschlag 46 des Gehäuseelementes 16 in gegenseitigen Wirkeingriff bringbar.

Nach Einbringen oder Einsetzen des Trennelementes 18 bzw. der Verdickung 28 in der Tasche 30 und Aufsetzen des Gehäuseelementes 16 auf dem Gehäuseelement 14, wobei die Lasche 40, Stirnseite 44 und der Anschlag 46 zugleich der Zentrierung dienen, werden die zwei Gehäuseelemente 14, 16 miteinander verschweißt. Die gemeinsame Schweißnaht 48 ist entsprechend den Fig. 1 und 2 von der Verdickung 28 ausreichend entfernt.

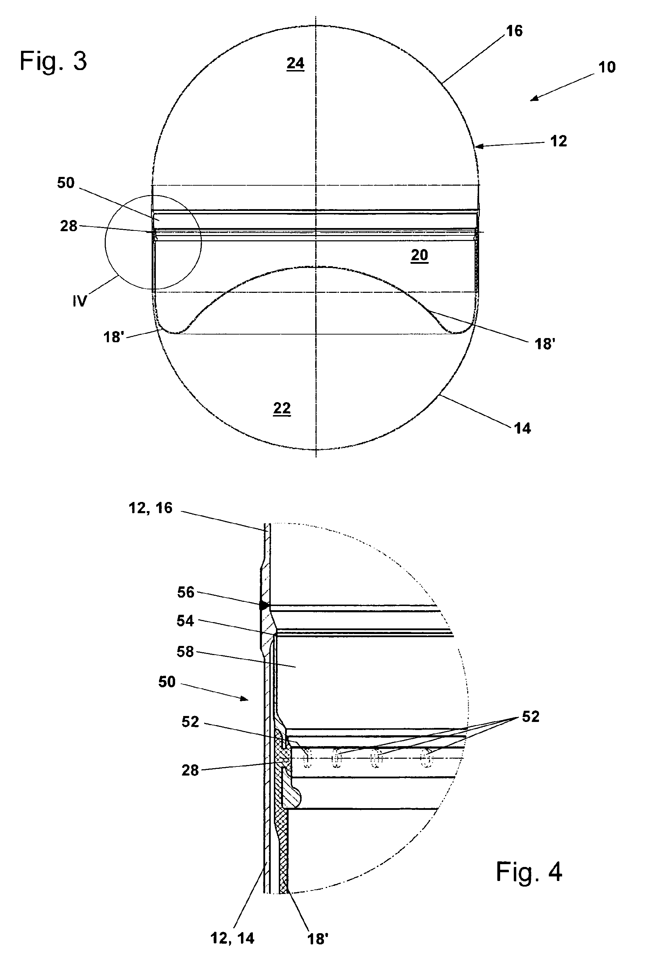

Die in den Fig. 3 und 4 schematisch dargestellte Ausführungsform des Behälters 10 umfasst gleichermaßen einen, insbesondere dünnwandigen, Mantel 12, der aus zwei miteinander zusammensetzbaren und verschweißbaren Gehäuseelementen 14, 16 gebildet ist.

Bei der Ausführungsform des Behälters 10 entsprechend den Fig. 3 und 4 ist das Trennelement 18' mit der randseitigen, umlaufenden Verdickung 28 an dem Behälter 10 in dem stirnseitigen Bereich 26 oder einem zu dem stirnseitigen Bereich 26 benachbarten Bereich des Gehäuseelementes 14 nicht wie bei der Ausführungsform des Behälters 10 nach den Fig. 1 und 2 unmittelbar, sondern mittelbar befestigbar.

Dabei ist das Trennelement 18' mit der Verdickung 28 an einem Halteelement 50 form- und/oder reibschlüssig angeordnet. Nachdem das Trennelement 18' bei dem Ausführungsbeispiel, das in den Fig. 3 und 4 vorgeschlagen ist, an dem bzw. auf das Halteelement 50 ein- oder aufvulkanisiert oder angeklebt ist, basiert die Verbindung hier auf einem Formschluss. Das Trennelement 18' ist mit der Verdickung 28 an dem Behälter 10 spannungsfrei befestigbar.

In diesem Zusammenhang kann die Oberfläche des Halteelementes 50 zur Erhöhung von dessen Haftfähigkeit und zur Verbesserung des Formschlusses insgesamt zusätzlich vorbehandelt, beispielsweise geprimmert, sein.

Zur weiteren Verbesserung der Verbindung zwischen dem Trennelement 18' und dem Halteelement 50 und damit einhergehend einer Erhöhung des Dichtvermögens des Trennelementes 18' ist das Halteelement 50 entsprechend der Fig. 4 zusätzlich mit Ausnehmungen 52, Vertiefungen und Nuten und/oder Erhebungen und Vorsprüngen und/oder Durchbrüchen versehen.

Wie die Fig. 4 zeigt, ist das Halteelement 50 selbst ausgesprochen dünn und/oder flach ausgebildet. Dadurch lassen sich der Hitzefluss und die Schweißverzüge beim Verschweißen von einem der beiden Gehäuseelemente 14, 16 und dem Halteelement 50 und/oder der beiden Gehäuseelemente 14, 16 miteinander erheblich reduzieren.

Das Trennelement 18' wird an das eine Gehäuseelement 14 entlang der Schweißnaht 54 geschweißt. Danach wird der Behälter 10 durch Zusammensetzen der zwei Gehäuseelemente 14, 16 verschlossen, die anschließend durch Verschweißen miteinander entlang der Schweißnaht 56 verbunden werden. Die Schweißnähte 54, 56 befinden sich in ausreichendem Abstand von dem Trennelement 18', so dass die Schweißhitze das Material des Trennelementes 18' selbst nicht beschädigt. Ohne im Einzelnen dargestellt zu sein, ist es ebenfalls möglich, die zwei Schweißungen 54, 56 zwischen dem einen Gehäuseelement 14 und dem Trennelement 18' zum einen und den zwei Gehäuseelementen 14, 16 miteinander zum anderen zu einer einzigen Schweißung zusammenzuziehen.

Das Halteelement 50 umfasst darüber hinaus einen Befestigungsabschnitt 58, der sich von dem Trennelement 18' mit der randseitigen, umlaufenden Verdickung 28 abgewandt erstreckt und mit mindestens einem der wenigstens zwei Gehäuseelemente 14, 16 verschweißbar ist.

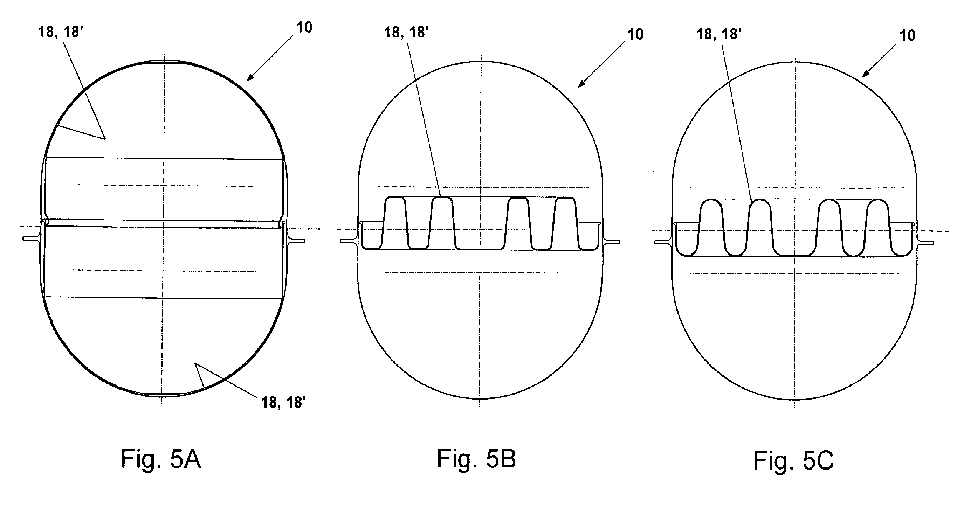

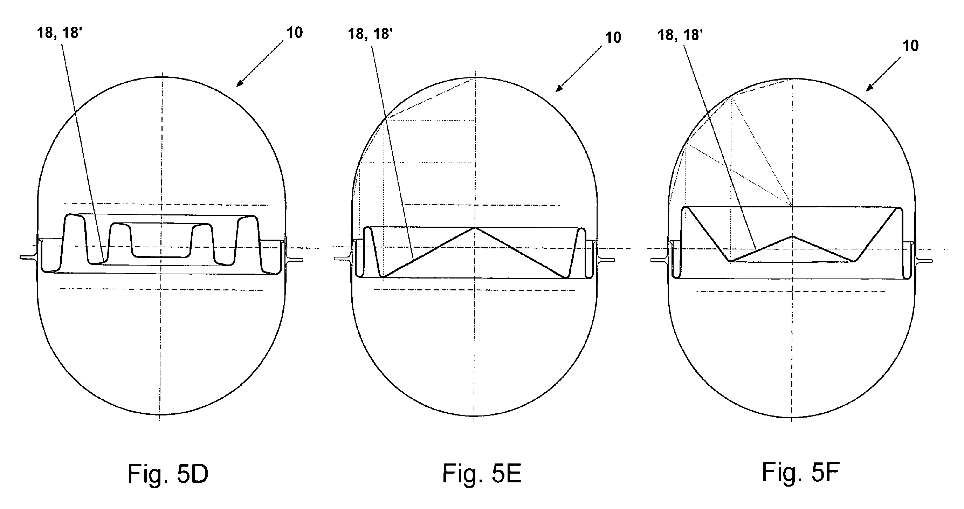

In den Fig. 5A bis 5F sind schließlich noch rein beispielhaft alternative Ausführungsformen eines erfindungsgemäß ausgebildeten Behälters 10 mit unterschiedlich ausgestalteten Trennelementen 18, 18' dargestellt.

Während das Trennelement 18, 18' bei den Ausführungsformen des Behälters 10 nach den Fig. 1 und 3 in den Behälter 10 lediglich teilweise nach unten ausgestülpt sind, ist das Trennelement 18, 18' bei der Ausführung nach der Fig. 5A - wie dargestellt - in den Behälter 10 vollständig nach oben durchgestülpt. Andeutungsweise ist es ebenso möglich, das Trennelement 18, 18' in entsprechender Weise in den Behälter 10 vollständig nach unten durchzustülpen.

Entsprechend der Fig. 5B ist das Trennelement 18, 18' in Form eines parallelen Mäanders gehalten. Das Trennelement 18, 18' nach der Fig. 5C ist ebenfalls in Form eines parallelen Mäanders gehalten, wobei jedoch zusätzlich ein Radius vorgesehen ist. Das Trennelement 18, 18', das in der Fig. 5D abgebildet ist, besitzt die Form eines kegeligen Mäanders. In der Fig. 5E ist ein Trennelement 18, 18' mit einer Zick-Zack-Form oder anderen beliebigen Form, welche den nachfolgend erläuterten Vorteil mit sich bringt, gezeigt. Das Trennelement 18, 18' schließlich weist eine winklige Zick-Zack-Form auf.

Sämtliche konstruktiven Ausbildungen des erfindungsgemäßen Trennelementes 18, 18' nach den Fig. 1, 3 und 5B bis 5F haben den besonderen Vorteil einer kostengünstigen Herstellung insgesamt. Nachdem die Herstellung von Trennelementen 18, 18' im sogenannten durchgestülpten Zustand aufgrund der Gesamthöhe erhebliche Kosten zur Bereitstellung geeigneter Spritzgussformen mit entsprechenden Abmessungen verursachen, lässt sich die Höhe des zu montierenden Trennelementes 18, 18' durch dessen Form nach den Fig. 1 und 3 um etwa den Faktor 2 und durch dessen Form nach den Fig. 5B bis 5F um etwa den Faktor 5 reduzieren. Die Kosten zur Bereitstellung der Spritzgussformen lassen sich somit erheblich vermindern, ohne die Funktionsfähigkeit des Trennelementes 18, 18', das unverändert elastisch ausgebildet ist und daher den Innenraum 20 des Behälters nahezu vollständig ausfüllen bzw. den Behälter 10 auskleiden kann, zu beeinträchtigen.

Die vorliegende Erfindung ist nicht auf die dargestellte Ausführungsformen des Behälters 10 beschränkt. So ist es ohne weiteres denkbar, das Trennelement 18 mit der randseitigen, umlaufenden Verdickung 28 bei der Ausführungsform nach den Fig. 1 und 2 an dem Behälter 10 in dem stirnseitigen Bereich 26 oder dem dazu benachbarten Bereich 26 des Gehäuseelementes 14 alternativ auch mittelbar zu befestigen. Die axial umlaufende Nut 30 oder Tasche ist dann an ein gesondertes, ringförmiges Halteelement (nicht dargestellt) - ähnlich dem Halteelement 48 wie bei der Ausführungsform des Behälters 10 nach den Fig. 3 und 4 - oder dergleichen Trägerelement (ebenfalls nicht dargestellt) angeformt, das an dem einen der wenigstens zwei Gehäuseelemente 14, 16, d.h. bei dem gezeigten Ausführungsbeispiel an dem Gehäuseelement 14, befestigbar ist. Eine Befestigung dessen kann insbesondere mittels Schweiß- oder Schraubverbindung vorgenommen werden.

## Patentansprüche

1. Behälter zum Aufnehmen, Speichern und Abgeben von gasförmigen, flüssigen und festen Medien, mit einem Mantel (12), der aus wenigstens zwei miteinander zusammensetzbaren und verschweißbaren Gehäuseelementen (14, 16) gebildet ist, und mindestens einem Trennelement (18), das in einem Innenraum (20) des Behälters (10) angeordnet ist, eine randseitige, umlaufende Verdickung (28) zum Befestigen an dem Behälter (10) aufweist und den Innenraum (20) des Behälters (10) in wenigstens zwei Kammern (22, 24) dichtend, insbesondere mediendicht, unterteilt, wobei das mindestens eine Trennelement (18) in einem stirnseitigen Bereich (26) oder einem zu dem stirnseitigen (26) Bereich benachbarten Bereich eines der wenigstens zwei Gehäuseelemente (14, 16) befestigbar ist, derart, dass dessen Dichtigkeit vor dem Zusammensetzen und Verschweißen der wenigstens zwei Gehäuseelemente (14, 16) überprüfbar ist, **dadurch gekennzeichnet, dass** das Trennelement (18) mit der randseitigen, umlaufenden Verdickung (28) in eine axial umlaufende Tasche (30) des einen der wenigstens zwei Gehäuseelemente (14, 16) einbringbar und in der axial umlaufenden Tasche (30) form- und/oder reibschlüssig gehalten ist.

2. Behälter nach Anspruch 1, **dadurch gekennzeichnet, dass** das Trennelement (18) mit der randseitigen, umlaufenden Verdickung (28) an dem Behälter (10) mit einer vorbestimmten, dauerhaft anhaltenden Vorspannung oder Verspannung oder spannungsfrei befestigbar ist.

3. Behälter nach Anspruch 1 oder 2, **dadurch gekennzeichnet, dass** das Trennelement (18, 18') mit der randseitigen, umlaufenden Verdickung (28) an dem Behälter (10) in dem stirnseitigen Bereich (26) oder dem zu dem stirnseitigen Bereich (26) benachbarten Bereich des einen der wenigstens zwei Gehäuseelemente (14, 16) unmittelbar oder mittelbar befestigbar ist.

4. Behälter nach einem der Ansprüche 1 bis 3, **dadurch gekennzeichnet, dass** die randseitige, umlaufende Verdickung (28) des Trennelementes (18) im Querschnitt O-förmig, halbkugelförmig, kalottenförmig, konisch, elliptisch, dreieckförmig, quadratisch, rechteckförmig, polygonal oder parallelogrammförmig oder mit anderen Querschnittsformen ausgebildet ist.

5. Behälter nach einem der Ansprüche 1 bis 4, **dadurch gekennzeichnet, dass** die randseitige, umlaufende Verdickung (28) des Trennelementes (18) mit einem Verstärkungselement versehen ist.

6. Behälter nach Anspruch 5, **dadurch gekennzeichnet, dass** das Verstärkungselement in der randseitigen, umlaufenden Verdickung (28) das Trennelementes (18) integral angeordnet, insbesondere einvulkanisiert, ist.

7. Behälter nach Anspruch 5 oder 6, **dadurch gekennzeichnet, dass** das Verstärkungselement aus Metall, insbesondere aus Stahl, Edelstahl, Aluminium, Titan, einer Legierung daraus und/oder einer Kombination daraus und/oder aus Kunststoff, insbesondere faserverstärktem Kunststoff, und/oder aus Faserverbundwerkstoff gebildet ist.

8. Behälter nach einem der Ansprüche 5 bis 7, **dadurch gekennzeichnet, dass** das Verstärkungselement aus einem, insbesondere ringförmigen, Segment oder aus wenigstens zwei voneinander unabhängigen Segmenten gebildet ist.

9. Behälter nach einem der Ansprüche 1 bis 8, **dadurch gekennzeichnet, dass** die axial umlaufende Tasche (30) integral mit dem einen der wenigstens zwei Gehäuseelemente (14, 16) ausgebildet ist oder an einem gesonderten, ringförmigen und an dem einen der wenigstens zwei Gehäuseelemente (14, 16), insbesondere mittels Schweiß- oder Schraubverbindung, befestigbaren Halteelement oder Trägerelement angeformt ist.

10. Behälter nach einem der Ansprüche 1 bis 9, **dadurch gekennzeichnet, dass** die axial umlaufende Tasche (30) einen außenliegenden Schenkel (32), welcher den stirnseitigen Bereich (26) oder den zu dem stirnseitigen Bereich (26) benachbarten Bereich des einen der wenigstens zwei Gehäuseelemente (14, 16) bildet, umfasst.

11. Behälter nach einem der Ansprüche 1 bis 10, **dadurch gekennzeichnet, dass** die axial umlaufende Tasche (30) einen innenliegenden Schenkel (34), über welchen sich der außenliegende Schenkel (32) hinaus erstreckt, umfasst.

12. Behälter nach einem der Ansprüche 1 bis 11, **dadurch gekennzeichnet, dass** die axial umlaufende Tasche (30) einen innenliegenden Schenkel (34), welcher endseitig mit einer Verdickung (36) oder Abrundung zur schonenden und/oder knickfreien Abstützung des mindestens einen Trennelementes (18) versehen ist, umfasst.

13. Behälter nach einem der Ansprüche 1 bis 12, **dadurch gekennzeichnet, dass** die axial umlaufende Tasche (30) über eine Durchgangsbohrung (38) mit dem Innenraum (20) des Behälters (10) kommuniziert.

14. Behälter nach einem der Ansprüche 1 bis 13, **dadurch gekennzeichnet, dass** das Trennelement (18) mit der randseitigen, umlaufenden Verdickung (28) durch das andere der wenigstens zwei Gehäuseelemente (14, 16) in der axial umlaufenden Tasche (30) gehalten ist.

15. Behälter nach einem der Ansprüche 1 bis 14, **dadurch gekennzeichnet, dass** das Trennelement (18) mit der randseitigen, umlaufenden Verdickung (28) durch eine an dem anderen der wenigstens zwei Gehäuseelemente (14, 16) angeordnete, auskragende und zum stirnseitigen Bereich (26) oder einem zu dem stirnseitigen Bereich (26) benachbarten Bereich des einen der wenigstens zwei Gehäuseelemente (14, 16) innenliegende Lasche (40) in der axial umlaufenden Tasche (30) gehalten ist.

16. Behälter nach einem der Ansprüche 1 bis 15, **dadurch gekennzeichnet, dass** sich die wenigstens zwei Gehäuseelemente (14, 16) an einander abstützen, wobei die Stirnseite (44) des einen der wenigstens zwei Gehäuseelemente (14, 16) und ein korrespondierender Anschlag (46) des anderen der wenigstens zwei Gehäuseelemente (14, 16) in gegenseitigen Wirkeingriff bringbar sind.

17. Behälter nach einem der Ansprüche 1 bis 16, **dadurch gekennzeichnet, dass** das mindestens eine Trennelement (18) eine nach unten oder oben, vollständig oder teilweise durchgestülpte Form aufweist oder in einer Form eines parallelen Mäanders, eines parallelen Mäanders mit Radius, eines kegeligen Mäanders, einer parallelen Zick-Zack-Form oder einer winkligen Zick-Zack-Form oder dergleichen Form ausgebildet ist.

18. Verwendung eines Behälters nach einem der vorhergehenden Ansprüche zum Aufnehmen, Speichern und Abgeben von gasförmigen, flüssigen und festen Medien, in Luftfahrzeugen oder Fluggeräten der Luft- und Raumfahrt, vorzugsweise in Flugzeugen und Raumflugkörpern, oder als Druckspeicher oder Druckausgleichsgefäß, und/oder insbesondere Verwendung eines Behälters nach einem der vorhergehenden Ansprüche zum Aufnehmen, Speichern und Abgeben von gasförmigen, flüssigen und festen Medien, insbesondere von Flüssigkeiten und viskosen Stoffen, vorzugsweise von Treib- oder Kraftstoffen, wie Hydrazin, Monomethylhydrazin (MMH), unsymmetrischen Dimethlyhydrazin (UDMH) oder Kerosin, Oxidationsmitteln (Oxidatoren), wie Stickstofftetroxiden oder Distickstofftetroxiden (NTO), oder Treibstoff/Oxidator-Gemischen und/ oder (Trink-)Wasser und Abwasser, für Tanks und Treibstofftanks von Raketen und/oder Satelliten.

## Claims

1. Container for receiving, storing and dispensing gaseous, liquid and solid media, with a casing (12) being formed of at least two housing elements (14, 16) that can be fitted and welded together, and at least one separating element (18) that is arranged inside an interior space (20) of the container (10), having an outer circumferential bulge (28) for mounting to the container (10) and partitioning the interior space (20) of the container (10) into at least two chambers (22, 24) in a sealing manner, in particular in a manner sealing tight against the medium , wherein the at least one separating element (18) can be mounted in a face area (26) or an area adjacent to the face area (26) of one of the at least two housing elements (14, 16) in such a way that its tightness can be verified prior to fitting and welding the at least two housing elements (14, 16) together, **characterized in that** the separating element (18) with the outer circumferential bulge (28) can be inserted into an axially circumferential pocket (30) of the one of the at least two housing elements (14, 16) and is held within the axially circumferential pocket (30) in a form-locking and/or frictionally engaging manner.

2. Container according to claim 1, **characterized in that** the separating element (18) with the outer circumferential bulge (28) can be mounted to the container (10) with a predefined, permanently lasting pretension or tension, or in a tension-free manner.

3. Container according to claim 1 or 2, **characterized in that** the separating element (18, 18') with the outer circumferential bulge (28) can be mounted directly or indirectly to the container (10) in the face area (26) or the area adjacent to the face area (26) of the one of the at least two housing elements (14, 16).

4. Container according to one of claims 1 to 3, **characterized in that** the outer circumferential bulge (28) of the separating element (18) is designed in its cross-section with an O-shaped, hemispherical, dome-shaped, conical, elliptic, triangular, square, rectangular, polygonal or parallelogram-shaped shape or with any other cross-sectional shapes.

5. Container according to one of claims 1 to 4, **characterized in that** the outer circumferential bulge (28) of the separating element (18) is provided with a reinforcing element.

6. Container according to claim 5, **characterized in that** the reinforcing element in the outer circumferential bulge (28) of the separating element (18) is designed as an integral part, in particular vulcanized into it.

7. Container according to claim 5 or 6, **characterized in that** the reinforcing element is made of metal, in particular of steel, stainless steel, aluminium, titanium, any alloy of the above and/or any combination of the above and/or of plastic material, in particular fibre-reinforced plastic, and/or of fibre composite material.

8. Container according to one of claims 5 to 7, **characterized in that** the reinforcing element is formed of one, in particular ring-shaped, segment or of at least two segments that are independent from each other.

9. Container according to one of claims 1 to 8, **characterized in that** the axially circumferential pocket (30) is formed as an integral part of the one of the at least two housing elements (14, 16), or is moulded onto a separate, ring-shaped support element or carrier element that can be mounted to the one of the at least two housing elements (14, 16), in particular by means of a welded or bolted joint.

10. Container according to one of claims 1 to 9, **characterized in that** the axially circumferential pocket (30) comprises an outer leg (32) which forms the face area (26) or the area adjacent to the face area (26) of the one of the at least two housing elements (14, 16).

11. Container according to one of claims 1 to 10, **characterized in that** the axially circumferential pocket (30) comprises an inner leg (34) beyond which the outer leg (32) extends.

12. Container according to one of claims 1 to 11, **characterized in that** the axially circumferential pocket (30) comprises an inner leg (34) which is provided with a bulge (36) or rounding at the end to ensure a gentle and/or buckling-free support of the at least one separating element (18).

13. Container according to one of claims 1 to 12, **characterized in that** the axially circumferential pocket (30) communicates via a through-bore (38) with the interior space (20) of the container (10).

14. Container according to one of claims 1 to 13, **characterized in that** the separating element (18) with the outer circumferential bulge (28) is held inside the axially circumferential pocket (30) by the other of the at least two housing elements (14, 16).

15. Container according to one of claims 1 to 14, **characterized in that** the separating element (18) with the outer circumferential bulge (28) is held inside the axially circumferential pocket (30) by a bar (40) arranged at the other of the at least two housing elements (14, 16), projecting and located to the inside of the face area (26) or of an area adjacent to the face area (26) of the one of the at least two housing elements (14, 16).

16. Container according to one of claims 1 to 15, **characterized in that** the at least two housing elements (14, 16) rest against each other in a supporting manner, wherein the face area (44) of the one of the at least two housing elements (14, 16) and a corresponding stop collar (46) of the other of the at least two housing elements (14, 16) can be engaged in a mutual locking fit.

17. Container according to one of claims 1 to 16, **characterized in that** the at least one separating element (18) has a downwards or upwards, fully or partially caving shape, or is designed in the form of a parallel meander, of a parallel meander with radius, of a cone-shaped meander, of a parallel zigzag shape or of an angular zigzag shape or the like shape.

18. Use of a container according to one of the above claims for receiving, storing and dispensing gaseous, liquid and solid media in aircraft or aerospace aircraft, preferably in aeroplanes and spacecraft, or as a pressure accumulator or pressure compensation tank, and/or in particular use of a container according to one of the above claims for receiving, storing and dispensing gaseous, liquid and solid media, in particular liquids and viscous substances, preferably fuels or propellants, such as hydrazine, monomethylhydrazine (MMH), unsymmetrical dimethlyhydrazine (UDMH) or kerosine, oxidizing agents (oxidizers), such as nitrogen tetroxides or dinitrogen tetroxides (NTO), or fuel/oxidizer mixes and/or (drinking) water and waste water, for tanks and fuel tanks of rockets and/or satellites.

## Revendications

1. Récipient destiné à recevoir, stocker et distribuer des produits gazeux, liquides et solides, comprenant une enveloppe (12), qui est formée d'au moins deux éléments de boîtier (14, 16) susceptibles d'être assemblés et d'être soudés les uns aux autres, et au moins un élément de séparation (18) qui est agencé dans un volume intérieur (20) du récipient (10), qui comporte un épaississement de bordure périphérique (28) pour sa fixation sur le récipient (10), et qui subdivise le volume intérieur (20) du récipient (10) en au moins deux chambres (22, 24) de façon étanche, et en particulier de façon étanche aux produits, dans lequel ledit au moins un élément de séparation (18) est susceptible d'être fixé dans une zone du côté frontal (26) ou dans une zone voisine à la zone du côté frontal (26) de l'un desdits au moins deux éléments de boîtier (14, 16), de telle façon que son étanchéité peut être contrôlée avant l'assemblage et le soudage desdits au moins deux éléments de boîtier (14, 16), **caractérisé en ce que** l'élément de séparation (18) est susceptible d'être introduit avec l'épaississement de bordure périphérique (28) dans une poche périphérique axiale (30) de l'un desdits au moins deux éléments de boîtier (14, 16), et est maintenu par coopération de formes et/ou par coopération de friction dans la poche périphérique axiale (30).

2. Récipient selon la revendication 1, **caractérisé en ce que** l'élément de séparation (18) est susceptible d'être fixé avec l'épaississement de bordure périphérique (28) sur le récipient (10) avec une précontrainte prédéterminée durable, ou bien de manière serrée, ou encore sans contrainte.

3. Récipient selon la revendication 1 ou 2, **caractérisé en ce que** l'élément de séparation (18, 18') est susceptible d'être fixé de manière directe ou indirecte avec l'épaississement de bordure périphérique (28) sur le récipient (10) dans la zone du côté frontal (26) ou dans la zone voisine de la zone du côté frontal (26) de l'un desdits au moins deux éléments de boîtier (14, 16).

4. Récipient selon l'une des revendications 1 à 3, **caractérisé en ce que** l'épaississement de bordure périphérique (28) de l'élément de séparation (18) est réalisé avec une section transversale en forme de O, en forme hémisphérique, en forme de calotte, en forme conique, elliptique, triangulaire, carrée, rectangulaire, polygonale, ou en forme de parallélogramme ou encore avec d'autres formes de section transversale.

5. Récipient selon l'une des revendications 1 à 4, **caractérisé en ce que** l'épaississement de bordure périphérique (28) de l'élément de séparation (18) est pourvu d'un élément de renforcement.

6. Récipient selon la revendication 5, **caractérisé en ce que** l'élément de renforcement est agencé de manière intégrale dans l'épaississement (28) de bordure périphérique de l'élément de séparation (18), en particulier intégré par vulcanisation.

7. Récipient selon la revendication 5 ou 6, **caractérisé en ce que** l'élément de renforcement est formé en métal, en particulier en acier, acier spécial, aluminium, titane, un alliage de ceux-ci et/ou une combinaison de ceux-ci, et/ou en matière plastique, en particulier en matière plastique renforcée par des fibres, et/ou en un matériau composite à base de fibres.

8. Récipient selon l'une des revendications 5 à 7, **caractérisé en ce que** l'élément de renforcement est formé d'un segment, en particulier de forme annulaire, ou d'au moins deux segments indépendants l'un de l'autre.

9. Récipient selon l'une des revendications 1 à 8, **caractérisé en ce que** la poche périphérique axiale (30) est réalisée de manière intégrale avec l'un desdits au moins deux éléments de boîtier (14, 16), ou bien est conformée sur un élément de maintien ou un élément porteur spécial, de forme annulaire et susceptible d'être fixé sur l'un desdits au moins deux éléments de boîtier (14, 16), en particulier au moyen d'une liaison soudée ou d'une liaison vissée.

10. Récipient selon l'une des revendications 1 à 9, **caractérisé en ce que** la poche périphérique axiale (30) comporte une branche extérieure (32), qui forme la zone du côté frontal (26) ou la zone voisine de la zone du côté frontal (26) de l'un desdits au moins deux éléments de boîtier (14, 16).

11. Récipient selon l'une des revendications 1 à 10, **caractérisé en ce que** la poche périphérique axiale (30) comporte une branche intérieure (34), au-delà de laquelle s'étend la branche extérieure (32).

12. Récipient selon l'une des revendications 1 à 11, **caractérisé en ce que** la poche périphérique axiale (30) comporte une branche intérieure (34) qui est dotée à l'extrémité d'un épaississement (36) ou d'un arrondi pour le soutien avec ménagement et/ou sans pliage dudit au moins un élément de séparation (18).

13. Récipient selon l'une des revendications 1 à 12, **caractérisé en ce que** la poche périphérique axiale (30) communique via un perçage traversant (38) avec le volume intérieur (20) du récipient (10).

14. Récipient selon l'une des revendications 1 à 13, **caractérisé en ce que** l'élément de séparation (18) est maintenu avec l'épaississement de bordure périphérique (28) dans la poche périphérique axiale (30) au moyen de l'autre desdits au moins deux éléments de boîtier (14, 16).

15. Récipient selon l'une des revendications 1 à 14, **caractérisé en ce que** l'élément de séparation (18) est maintenu avec l'épaississement de bordure périphérique (28) dans la poche périphérique axiale (30) au moyen d'une patte (40) agencée sur l'autres desdits au moins deux éléments de boîtier (14, 16), en porte-à-faux, et située à l'intérieur de la zone du côté frontal (26) ou sur une zone voisine de la zone du côté frontal (26) de l'un desdits au moins deux éléments de boîtier (14, 16).

16. Récipient selon l'une des revendications 1 à 15, **caractérisé en ce que** lesdits au moins deux éléments de boîtier (14, 16) se soutiennent l'un l'autre, de sorte que la face frontale (44) de l'un desdits au moins deux éléments de boîtier (14, 16) et une butée correspondante (46) de l'autre desdits au moins deux éléments de boîtier (14, 16) sont susceptibles d'être amenées en engagement mutuel.

17. Récipient selon l'une des revendications 1 à 16, **caractérisé en ce que** ledit au moins un élément de séparation (18) présente une forme retroussée vers le haut ou vers le bas, en totalité ou partiellement, ou bien est réalisé sous la forme d'un méandre parallèle, d'un méandre parallèle avec un rayon, d'un méandre à forme conique, sous une forme en zigzag parallèle ou une forme en zigzag anguleux, ou une forme analogue.

18. Utilisation d'un récipient selon l'une des revendications précédentes pour recevoir, stocker et distribuer des produits gazeux, liquides et solides, dans des aéronefs ou des engins volants de l'aéronautique ou de l'aérospatiale, de préférence dans des avions ou des engins spatiaux, ou bien à titre d'accumulateurs de pression ou de récipients de compensation de pression, et/ou en particulier utilisation d'un récipient selon l'une des revendications précédentes pour recevoir, stocker et distribuer des produits gazeux, liquides et solides, en particulier des liquides et des produits visqueux, de préférence des agents de propulsion ou des carburants, comme hydrazine, monométhyle hydrazine (MMH), diméthyle hydrazine monosymétrique (UDMH) ou kérosène, agents d'oxydation (oxydateurs), comme tétraoxyde d'azote ou tétraoxyde diazoté (NTO), ou encore des mélanges carburant/oxydateur et/ou de l'eau (potable) et des eaux usées, pour des réservoirs et des réservoirs de carburant de fusées et/ou de satellites.
